(19) 
**Europäisches Patentamt**
**European Patent Office**
**Office européen des brevets**

(11) **EP 4 191 974 B1**

(12) **EUROPEAN PATENT SPECIFICATION**

(45) Date of publication and mention
of the grant of the patent:
**22.10.2025 Bulletin 2025/43**

(21) Application number: **21860042.7**

(22) Date of filing: **30.07.2021**

(51) International Patent Classification (IPC):
*H04L 67/06* (2022.01)     *H04L 9/40* (2022.01)
*H04N 21/4363* (2011.01)     *H04L 65/75* (2022.01)
*H04L 65/80* (2022.01)     *H04N 21/44* (2011.01)

(52) Cooperative Patent Classification (CPC):
**H04N 21/44008; H04L 65/762; H04L 65/80;**
**H04L 67/06; H04N 21/43637; H04N 21/44004**

(86) International application number:
**PCT/CN2021/109429**

(87) International publication number:
**WO 2022/042202 (03.03.2022 Gazette 2022/09)**

(54) **MEDIA FILE TRANSMISSION METHOD AND APPARATUS**

VERFAHREN UND VORRICHTUNG ZUR ÜBERTRAGUNG VON MEDIENDATEIEN

PROCÉDÉ ET APPAREIL DE TRANSMISSION DE FICHIER MULTIMÉDIA

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.08.2020 CN 202010897642**

(43) Date of publication of application:
**07.06.2023 Bulletin 2023/23**

(73) Proprietor: **Huawei Technologies Co., Ltd.**
**Longgang**
**Shenzhen, Guangdong 518129 (CN)**

(72) Inventors:
• **SUN, Li**
**Shenzhen, Guangdong 518129 (CN)**
• **VALLAS, Oleh**
**Shenzhen, Guangdong 518129 (CN)**
• **WANG, Hao**
**Shenzhen, Guangdong 518129 (CN)**
• **HUANG, Libo**
**Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
**EP-A1- 1 555 788     CN-A- 105 959 742**
**CN-A- 107 819 551     CN-A- 107 920 041**
**CN-A- 108 833 350     JP-A- 2007 174 173**
**US-A1- 2010 235 472     US-A1- 2016 105 478**

• **YAQOOB ABID ET AL: "A DASH-based Efficient**
**Throughput and Buffer Occupancy-based**
**Adaptation Algorithm for Smooth Multimedia**
**Streaming", 2019 15TH INTERNATIONAL**
**WIRELESS COMMUNICATIONS & MOBILE**
**COMPUTING CONFERENCE (IWCMC), IEEE, 24**
**June 2019 (2019-06-24), pages 643 - 649,**
**XP033578233, DOI: 10.1109/**
**IWCMC.2019.8766648**

## Description

This application claims priority to Chinese Patent Application No. 202010897642.1, filed with the China National Intellectual Property Administration on August 31, 2020 and entitled "MEDIA FILE TRANSMISSION METHOD AND APPARATUS".

## TECHNICAL FIELD

This application relates to the field of electronic devices, and more specifically, to a media file transmission method and apparatus.

## BACKGROUND

As types of electronic devices increase, a user may use different electronic devices to store and play a media file. Sometimes, the user expects the media file to be played across devices.

In a process of transmitting a media file across devices, an electronic device may transmit the media file each time in a manner of transmitting a data block of a fixed size, in a manner of increasing or decreasing a multiple of a size of a data block, or in a streaming transmission manner. However, in the process of transmitting the media file across the devices in the foregoing transmission manner, when a bit rate of the media file is high, frame freezing occurs when another electronic device plays the media file transmitted by the electronic device. In addition, when a network environment is unstable, some data blocks are transmitted slowly in a transmission process, and consequently some data blocks are lost in the process of playing the media file by the another electronic device.

US2016/105478A1 generally discloses a network element operable to communicate Moving Picture Experts Group (MPEG)-2 streaming video quality information.

CN107819551A generally discloses a communication processing method of transmitting data in which a transmission bit rate of the data to be transmitted is determined based on the data characteristics such as data format, data size, and data transmission characteristics.

## SUMMARY

This application provides a media file transmission method and apparatus, so that different media files can be transmitted by using a data amount suitable for transmission of the media file. In this way, network bandwidth utilization is optimized, occurrence of a frame freezing phenomenon during play of the media file is reduced, a packet loss rate of playing the media file across electronic devices is reduced, and user experience is improved.

According to a first aspect, a media file transmission method is provided, where the method is applied to an electronic device. The method includes: determining bit rate information of a media file, where the bit rate information includes bit rates at n moments, n is greater than or equal to 1, n is a positive integer, the n moments are respectively $T_j$, and $j=1, 2, 3, ...,$ and $n$; determining pre-read data amounts of the media file at the n moments based on the bit rate information; and sending the media file based on the pre-read data amounts at the n moments.

In this first aspect, a first electronic device determines bit rates of the media file at the n moments, and determines a pre-read data amount of the media file at each moment based on the bit rates of the media file at the n moments, so that the first electronic device sends the media file based on the pre-read data amounts of the media file at the n moments, and the media file is played across electronic devices. Therefore, the first electronic device may transmit different media files by using a data amount suitable for transmission of the media file, so that network bandwidth utilization is optimized, occurrence of a frame freezing phenomenon during play of the media file is reduced, a packet loss rate of playing the media file across electronic devices is reduced, and user experience is improved.

Further according to the first aspect, the determining pre-read data amounts of the media file at the n moments based on the bit rate information includes: calculating an average bit rate at each moment $T_j$ within a time period between a moment $t_{i-1}$ and a moment $t_m$ based on the bit rate information, where $i=1, 2, 3, ...,$ and $m$, a moment $t_0$ is a moment $T_1$, the moment $t_m$ is a moment $T_n$, the moment $t_{i-1}$ is a moment $T_b$, $1 \le m \le n$, and $1 \le b \le n$; determining a moment $t_i$ within the time period between the moment $t_{i-1}$ and the moment $t_m$, where an average bit rate at the moment $t_i$ is a largest average bit rate in average bit rates within the time period between the moment $t_{i-1}$ and the moment $t_m$, the moment $t_i$ is a moment $T_a$, and $1 \le a \le n$; and when i is equal to 1, using the average bit rate at the moment $t_i$ as a pre-read data amount from the moment $T_b$ to the moment $T_a$; or when i is greater than 1, using the average bit rate at the moment $t_i$ as a pre-read data amount from a moment $T_{b+1}$ to the moment $T_a$, where the moment $T_{b+1}$ is a next moment of the moment $T_b$.

With reference to the first aspect, in some implementations of the first aspect, the calculating an average bit rate at each moment $T_j$ within a time period between a moment $t_{i-1}$ and a moment $t_m$ based on the bit rate information includes: when i is equal to 1, calculating average bit rates at $T_j$ moments within the time period between the moment $t_{i-1}$ and the

moment tm according to Formula (1):

$$P_j = \frac{\sum_1^j b_j}{j} \quad (1),$$

where

$P_j$ is an average bit rate at a $j^{th}$ moment, and $b_j$ is a bit rate at a $j^{th}$ moment; or
when i is greater than 1, calculating the average bit rate at the $T_j$ moments within the time period between the moment $t_{i-1}$ and the moment $t_m$ according to Formula (2):

$$P_j = \frac{\sum_{b+1}^j b_j}{j-b} \quad (2),$$

where
$P_j$ is an average bit rate at a $j^{th}$ moment, and $b_j$ is a bit rate at a $j^{th}$ moment.

With reference to the first aspect, in some implementations of the first aspect, the determining pre-read data amounts of the media file at the n moments based on the bit rate information includes: respectively using the bit rates at the n moments as the pre-read data amounts at the n moments.

With reference to the first aspect, in some implementations of the first aspect, the media file includes a video file and/or an audio file.

According to a first example that is not encompassed by the claims but useful for understanding the invention, a media file transmission method is provided, where the method is applied to another electronic device. The method includes:
receiving a media file that is sent by the electronic device based on pre-read data amounts at n moments, where the pre-read data amounts at the n moments are determined based on bit rate information of the media file, the bit rate information includes bit rates at the n moments, n is greater than or equal to 1, n is a positive integer, the n moments are respectively Tj, and j=1, 2, 3, ..., and n.

Futher according to this first example, a second electronic device receives the media file that is sent based on pre-read data amounts of the media file at n moments, where the pre-read data amounts at the n moments are determined based on bit rate information of the media file, the bit rate information includes bit rates at the n moments, n is greater than or equal to 1, n is a positive integer, the n moments are respectively Tj, and j=1, 2, 3, ..., and n. Therefore, occurrence of a frame freezing phenomenon during play of the media file is reduced, a packet loss rate of playing the media file across electronic devices is reduced, and user experience is improved.

Futher according to this first example, the media file is played after the media file is cached for a preset time period, where the preset time period is less than total duration of the media file.

For example, the preset time period may be set to 2 seconds.

The media file is played after the media file is cached for the preset time period, so that a play start delay requirement can be met. Further, occurrence of a play start delay can be effectively reduced, and memory is not excessively occupied.

Futher according to this first example, in some implementations of the second aspect, the media file includes a video file and/or an audio file.

According to a second example that is not encompassed by the claims but useful for understanding the invention, a media file transmission apparatus is provided. The apparatus includes an analysis module, a prefetching module, and a sending module. The analysis module is configured to determine bit rate information of a media file, where the bit rate information includes bit rates at n moments, n is greater than or equal to 1, n is a positive integer, the n moments are respectively Tj, and j=1, 2, 3, ..., and n. The prefetching module is configured to determine pre-read data amounts of the media file at the n moments based on the bit rate information. The sending module is configured to send the media file based on the pre-read data amounts at the n moments.

Futher according to this second example, the prefetching module is further specifically configured to: calculate an average bit rate at each moment Tj within a time period between a moment ti-1 and a moment tm based on the bit rate information, where i=1, 2, 3, ..., and m, a moment t0 is a moment T1, the moment tm is a moment Tn, the moment ti-1 is a

moment Tb, $1 \leq m \leq n$, and $1 \leq b \leq n$; determine a moment ti within the time period between the moment ti-1 and the moment tm, where an average bit rate at the moment ti is a largest average bit rate in average bit rates within the time period between the moment ti-1 and the moment tm, the moment ti is a moment Ta, and $1 \leq a \leq n$; and when i is equal to 1, use the average bit rate at the moment ti as a pre-read data amount from the moment Tb to the moment Ta; or when i is greater than 1, use the average bit rate at the moment ti as a pre-read data amount from a moment Tb+1 to the moment Ta, where the moment Tb+1 is a next moment of the moment Tb.

Futher according to this second example, the prefetching module is further specifically configured to:
when i is equal to 1, calculate average bit rates at $T_j$ moments within the time period between the moment $t_{i-1}$ and the moment $t_m$ according to Formula (1):

$$P_j = \frac{\sum_1^j b_j}{j} \quad (1),$$

where

$P_j$ is an average bit rate at a $j^{th}$ moment, and $b_j$ is a bit rate at a $j^{th}$ moment; or
when i is greater than 1, calculate average bit rates at $T_j$ moments within the time period between the moment $t_{i-1}$ and the moment $t_m$ according to Formula (2):

$$P_j = \frac{\sum_{b+1}^j b_j}{j-b} \quad (2),$$

where
$P_j$ is an average bit rate at a $j^{th}$ moment, and $b_j$ is a bit rate at a $j^{th}$ moment.

Futher according to this second example, the prefetching module is further specifically configured to: respectively use the bit rates at the n moments as the pre-read data amounts at the n moments.

Futher according to this second example, the media file includes a video file and/or an audio file.

According to a third example that is not encompassed by the claims but useful for understanding the invention, a media file transmission apparatus is provided. The apparatus includes a receiving module. The receiving module is configured to receive a media file that is sent by an electronic device based on pre-read data amounts at n moments, where the pre-read data amounts at the n moments are determined based on bit rate information of the media file, the bit rate information includes bit rates at the n moments, n is greater than or equal to 1, n is a positive integer, the n moments are respectively Tj, and j=1, 2, 3, ..., and n.

Futher according to this third example, the apparatus further includes a play module. The play module is configured to play the media file after the media file is cached for a preset time period, where the preset time period is less than total duration of the media file.

Futher according to this third example, the media file includes a video file and/or an audio file.

According to a second aspect, a system is provided, where the system includes a first electronic device and a second electronic device. The first electronic device is configured to determine bit rate information of a media file, where the bit rate information includes bit rates at n moments, n is greater than or equal to 1, n is a positive integer, the n moments are respectively Tj, and j=1, 2, 3, ..., and n. The first electronic device is further configured to determine pre-read data amounts of the media file at the n moments based on the bit rate information. The second electronic device is configured to receive the media file that is sent by the first electronic device based on the pre-read data amounts at the n moments.

Further according to this second aspect, the first electronic device determines bit rates of the media file at the n moments, and determines a pre-read data amount of the media file at each moment based on the bit rates of the media file at the n moments, so that the first electronic device sends the media file to the second electronic device based on the pre-read data amounts of the media file at the n moments, and the media file is played across electronic devices. Therefore, the first electronic device may transmit different media files by using a data amount suitable for transmission of the media file, so that network bandwidth utilization is optimized, and a packet loss rate of playing the media file across electronic devices is reduced. In addition, the second electronic device receives the media file based on the pre-read data amount, pre-stores a data block, and plays the media file based on the pre-read data amount, so that an opening speed of play start of a video is effectively improved, occurrence of a frame freezing phenomenon during play of the media file is reduced, memory space is used as required, and user experience is improved.

Further according to this second aspect, in some implementations of the fifth aspect, the first electronic device is further specifically configured to: calculate an average bit rate at each moment Tj within a time period between a moment ti-1 and a moment tm based on the bit rate information, where i=1, 2, 3, ..., and m, a moment t0 is a moment T1, the moment tm is a moment Tn, the moment ti-1 is a moment Tb, $1 \leq m \leq n$, and $1 \leq b \leq n$; determine a moment ti within the time period between the moment ti-1 and the moment tm, where an average bit rate at the moment ti is a largest average bit rate in average bit rates within the time period between the moment ti-1 and the moment tm, the moment ti is a moment Ta, and $1 \leq a \leq n$; and when i is equal to **1,** use the average bit rate at the moment ti as a pre-read data amount from the moment Tb to the moment Ta; or when i is greater than **1,** use the average bit rate at the moment ti as a pre-read data amount from a moment Tb+1 to the moment Ta, where the moment Tb+1 is a next moment of the moment Tb.

Further according to this second aspect, the first electronic device is further specifically configured to: when i is equal to **1,** calculate average bit rates at Tj moments within the time period between the moment ti-1 and the moment tm according to Formula (1):

$$P_j = \frac{\sum_1^j b_j}{j} \quad (1),$$

where

$P_j$ is an average bit rate at a $j^{th}$ moment, and $b_j$ is a bit rate at a $j^{th}$ moment; or
when i is greater than 1, calculate average bit rates at $T_j$ moments within the time period between the moment $t_{i-1}$ and the moment $t_m$ according to Formula (2):

$$P_j = \frac{\sum_{b+1}^j b_j}{j-b} \quad (2),$$

where
$P_j$ is an average bit rate at a $j^{th}$ moment, and $b_j$ is a bit rate at a $j^{th}$ moment.

Further according to this second aspect, in some implementations of the fifth aspect, the first electronic device is further specifically configured to: respectively use the bit rates at the n moments as the pre-read data amounts at the n moments.

Further according to this second aspect, the media file includes a video file and/or an audio file.

Further according to this second aspect, the second electronic device is further configured to play the media file after the media file is cached for a preset time period, where the preset time period is less than total duration of the media file.

After the media file is cached for the preset time period, the second electronic device plays the media file based on the pre-read data amount, so that a play start delay requirement can be met, an opening speed of play start of a video is effectively improved, occurrence of a frame freezing phenomenon during play of the media file is reduced, memory space is used as required, and user experience is improved.

According to a third aspect, an electronic device is provided, including one or more processors and one or more memories. The one or more memories store one or more computer programs, and the one or more computer programs include instructions. When the instructions are executed by the one or more processors, the electronic device is enabled to perform the method according to any one of the first aspect or some implementations of the first aspect.

According to a fourth example that is not encompassed by the claims but useful for understanding the invention, an electronic device is provided, including one or more processors and one or more memories. The one or more memories store one or more computer programs, and the one or more computer programs include instructions. When the instructions are executed by the one or more processors, the electronic device is enabled to perform the method according to any one of the second aspect or some implementations of the second aspect.

According to fifth example that is not encompassed by the claims but useful for understanding the invention, a communication apparatus is provided. The apparatus may be a first electronic device, or may be a chip in a first electronic device. The apparatus may include a processing unit and a transceiver unit. When the apparatus is the first electronic device, the processing unit may be a processor, and the transceiver unit may be a transceiver. The first electronic device may further include a storage unit, and the storage unit may be a memory. The storage unit is configured to store instructions, and the processing unit executes the instructions stored in the storage unit, so that the first electronic device performs the method according to any one of the first aspect or some implementations of the first aspect. When the apparatus is the chip in the first electronic device, the processing unit may be a processor, and the transceiver unit may be an input/output interface, a pin, a circuit, or the like. The processing unit executes instructions stored in a storage unit, so that the first electronic device performs the method according to any one of the first aspect or some implementations of the first aspect. The storage unit may be a storage unit (for example, a register or a cache) in the chip, or may be a storage unit (for example, a read-only memory or a random access memory) that is in the first electronic device and that is located outside the chip.

According to a sixth example that is not encompassed by the claims but useful for understanding the invention, a communication apparatus is provided. The apparatus may be a second electronic device, or may be a chip in a second electronic device. The apparatus may include a processing unit and a transceiver unit. When the apparatus is the second electronic device, the processing unit may be a processor, and the transceiver unit may be a transceiver. The second electronic device may further include a storage unit, and the storage unit may be a memory. The storage unit is configured to store instructions, and the processing unit executes the instructions stored in the storage unit, so that the second electronic device performs the method according to any one of the second aspect or some implementations of the second aspect. When the apparatus is the chip in the second electronic device, the processing unit may be a processor, and the transceiver unit may be an input/output interface, a pin, a circuit, or the like. The processing unit executes instructions stored in a storage unit, so that the second electronic device performs the method according to any one of the second aspect or some implementations of the second aspect. The storage unit may be a storage unit (for example, a register or a cache) in the chip, or may be a storage unit (for example, a read-only memory or a random access memory) that is in the second electronic device and that is located outside the chip.

According to a seventh example that is not encompassed by the claims but useful for understading the invention, a computer program product is provided, where the computer program product includes computer program code. When the computer program code is run on a computer, the computer is enabled to perform the method according to any one of the first aspect or some implementations of the first aspect.

It should be noted that all or some of the computer program code may be stored in a first storage medium. The first storage medium may be encapsulated together with a processor, or may be encapsulated separately from a processor. This is not specifically limited in this embodiment of this application.

According to an eighth example that is not encompassed by the claims but useful for understanding the invention, a computer program product is provided, where the computer program product includes computer program code. When the computer program code is run on a computer, the computer is enabled to perform the method according to any one of the second aspect or some implementations of the second aspect.

It should be noted that all or some of the computer program code may be stored in a second storage medium. The second storage medium may be encapsulated together with a processor, or may be encapsulated separately from a processor. This is not specifically limited in this embodiment of this application.

According to a fourth aspect, a computer-readable medium is provided, where the computer-readable medium stores program code. When the computer program code is run on a computer, the computer is enabled to perform the method according to any one of the first aspect or some implementations of the first aspect.

According to a ninth example that is not encompassed by the claims but useful for understanding the invention, a computer-readable medium is provided, where the computer-readable medium stores program code. When the computer program code is run on a computer, the computer is enabled to perform the method according to any one of the second aspect or some implementations of the second aspect.

## BRIEF DESCRIPTION OF DRAWINGS

FIG. 1 is a schematic diagram of a hardware structure of an electronic device according to an embodiment of this application;
FIG. 2 is a schematic diagram of an example of an application scenario according to an embodiment of this application;
FIG. 3 is a schematic flowchart of a media file transmission method according to an embodiment of this application;
FIG. 4 is a schematic diagram of an example of a bit rate corresponding to a media file at each moment according to an embodiment of this application;
FIG. 5 is a schematic block diagram of an example of a first electronic device according to an embodiment of this application;
FIG. 6 is a schematic block diagram of another example of a first electronic device according to an embodiment of this application;

FIG. 7 is a schematic block diagram of an example of a second electronic device according to an embodiment of this application;

FIG. 8 is a schematic block diagram of another example of a second electronic device according to an embodiment of this application; and

FIG. 9 is a schematic block diagram of an example of a system according to an embodiment of this application.

## DESCRIPTION OF EMBODIMENTS

Terms used in the following embodiments are merely intended to describe specific embodiments, but are not intended to limit this application. As used in the specification and appended claims of this application, singular expressions "one", "a", "the", "the foregoing", "this", and "the one" are also intended to include expressions such as "one or more", unless the contrary is clearly indicated in the context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects.

The following describes an electronic device, a user interface used for such an electronic device, and embodiments for using such an electronic device. In some embodiments, the electronic device may be a portable electronic device that further includes another function such as a personal digital assistant and/or a music player function, for example, a mobile phone, a tablet computer, or a wearable electronic device (for example, a smart watch) having a wireless communication function. An example embodiment of the portable electronic device includes but is not limited to a portable electronic device carrying iOS®, Android®, Microsoft®, or another operating system. The portable electronic device may alternatively be another portable electronic device, for example, a laptop (Laptop) computer. It should be further understood that, in some other embodiments, the electronic device may not be a portable electronic device, but a desktop computer.

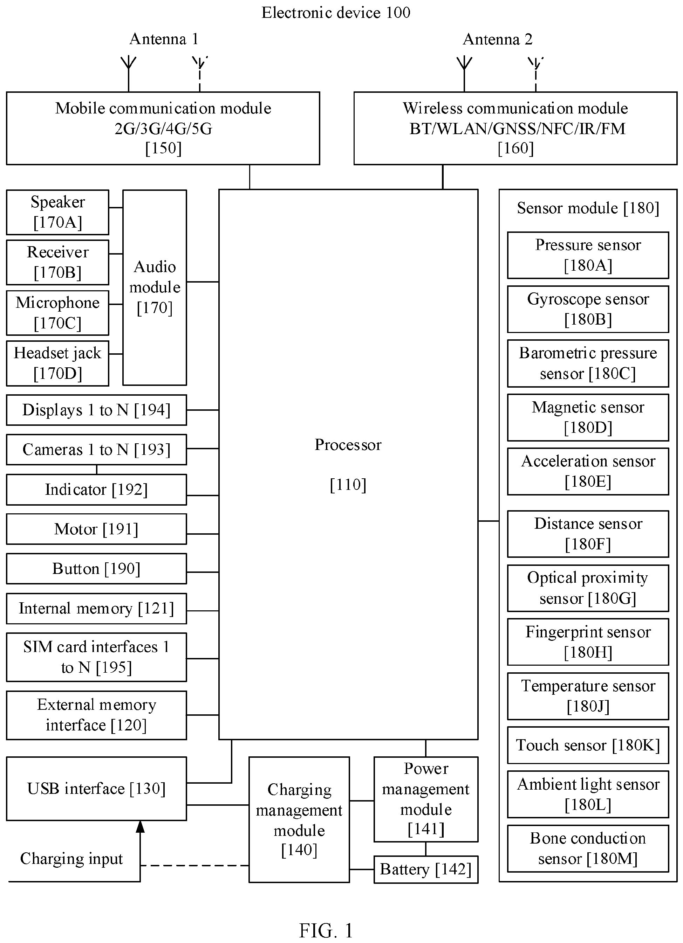

For example, FIG. 1 shows a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure illustrated in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to control instruction fetching and instruction execution. In some other embodiments, a memory may be further disposed in the processor 110, and is configured to store instructions and data. For example, the memory in the processor 110 may be a cache. The memory may store instructions or data just used or cyclically used by the processor 110. If the processor 110 needs to use the instructions or the data again, the processor 110 may directly invoke the instructions or the data from the memory. In this way, repeated access is avoided, waiting time of the processor 110 is reduced, and efficiency of processing data or executing instructions by the electronic device 100 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. Alternatively, the USB interface 130 may be configured to connect to a headset, to play audio through the headset.

It may be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners. The charging management module 140 is configured to receive a charging input from a charger. The charging management module 140 may receive a charging input from a wired charger through the USB interface 130. In some wireless charging embodiments, the charging management module 140 may receive a wireless charging input through a wireless charging coil of the electronic device 100. When charging the battery 142, the charging management module 140 may further supply power to the electronic device by using the power management module 141. The power management module 141 is configured to connect to the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, mini LED), a micro LED, a micro OLED, a quantum dot light-emitting diode (quantum dot light-emitting diode, QLED), or the like. In some embodiments, the electronic device 100 may include one or more displays 194.

The ISP is configured to process data fed back by the camera 193. For example, during photographing, a shutter is pressed, and a light ray is transmitted to a photosensitive element of a camera through a lens. An optical signal is converted into an electrical signal. The photosensitive element of the camera transmits the electrical signal to the ISP for processing, and converts the electrical signal into a visible image.

The camera 193 is configured to capture a static image or a video. The external memory interface 120 may be configured to connect to an external storage card, for example, a micro SD card, to extend a storage capability of the electronic device 100.

The external storage card communicates with the processor 110 through the external memory interface 120, to implement a data storage function. For example, media files such as music and a video are stored in the external storage card.

The internal memory 121 may be configured to store one or more computer programs, where the one or more computer programs include instructions. The processor 110 may run the instructions stored in the internal memory 121, so that the electronic device 100 is enabled to perform a data sharing method provided in some embodiments of this application, various applications, data processing, and the like.

The electronic device 100 may implement audio functions by using the audio module 170, the speaker 170A, the receiver 170B, the microphone 170C, the headset jack 170D, the application processor, and the like. For example, a music play function and a recording function are implemented.

In addition, the electronic device 100 may further include a plurality of sensors. For example, a plurality of sensors are shown in FIG. 1. The pressure sensor 180A is configured to sense a pressure signal, and may convert the pressure signal into an electrical signal. The gyroscope sensor 180B may be configured to determine a motion posture of the electronic device 100. The magnetic sensor 180D includes a Hall sensor. The acceleration sensor 180E may detect magnitudes of accelerations in various directions (generally on three axes) of the electronic device 100. The distance sensor 180F is configured to measure a distance. The optical proximity sensor 180G may include a light-emitting diode (LED) and an optical detector, for example, a photodiode. The light-emitting diode may be an infrared light-emitting diode. The ambient light sensor 180L is configured to sense ambient light brightness. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. The touch sensor 180K is also referred to as a "touch panel". The touch sensor 180K may be disposed on the display 194. The touch sensor 180K and the display 194 constitute a touchscreen, and the touchscreen is also referred to as a "touch control screen". The touch sensor 180K is configured to detect a touch operation performed on or near the touch sensor. The touch sensor may transfer the detected touch operation to the application processor, to determine a type of a touch event. A visual output related to the touch operation may be provided by using the display 194. In some other embodiments, the touch sensor 180K may be alternatively disposed on a surface of the electronic device 100, and is located on a position different from that of the display 194.

For ease of understanding, in the following embodiments of this application, the electronic device having a structure shown in FIG. 1 is used as an example to describe in detail the media file transmission method provided in embodiments of this application with reference to the accompanying drawings and application scenarios.

An application scenario of the media file transmission method provided in this application is not limited in this application.

For example, the application scenario of the media file transmission method provided in embodiments of this application may be a home scenario, an office scenario, or the like.

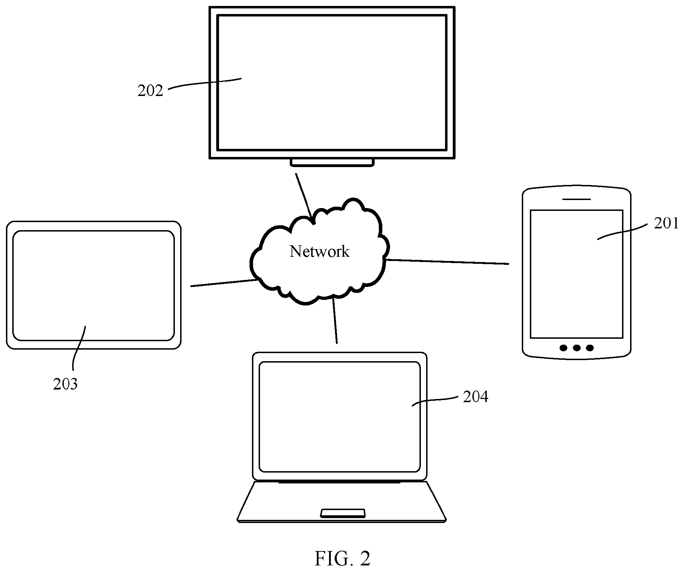

The following uses FIG. 2 as an example to describe an application scenario of a media file transmission method according to an embodiment of this application. It should be understood that various application scenarios and devices shown in FIG. 2 are merely examples of this embodiment of this application. Any application scenario in FIG. 2 may further include fewer or more devices.

As shown in FIG. 2, the application scenario may include a mobile phone 201, a large screen 202, a tablet computer 203, and a personal computer (personal computer, PC) 204. The mobile phone 201, the large screen 202, the tablet computer 203, and the PC 204 may communicate with each other by using a network.

As types of electronic devices increase, a user may use different electronic devices to store and play a media file. Sometimes, the user expects the media file to be played across devices.

For example, the media file may be played across devices in a download manner.

In the download manner, the user downloads the media file on an electronic device, and transmits the downloaded media file to another electronic device by using a network.

In a media file transmission process, the electronic device may perform transmission each time in a manner of transmitting a data block of a fixed size.

For example, the electronic device may perform transmission in a manner of transmitting a data block of 1 Mbyte per second.

In a process of performing media file cross-device transmission in the manner of transmitting a data block of a fixed size, when a bit rate of the media file is high, frame freezing occurs when another electronic device plays the media file transmitted by the electronic device. In addition, when a network environment is unstable, some data blocks are transmitted slowly in a transmission process, and some data blocks are lost in a process of playing the media file by the another electronic device.

In a media file transmission process, the electronic device may further perform transmission in a manner of increasing or decreasing a multiple of a size of a data block.

For example, at the 1st second, the electronic device may perform transmission in a manner of transmitting a data block of 1 Mbyte per second; at the 2nd second, the electronic device may perform transmission in a manner of transmitting a data block of 2 Mbyte per second; ...; and at the Nth second, the electronic device may perform transmission in a manner of transmitting a data block of N Mbyte per second.

In a process of performing media file cross-device transmission in the manner of increasing or decreasing a multiple of a size of a data block, when a bit rate of the media file is high, frame freezing occurs when another electronic device plays the media file transmitted by the electronic device. In addition, network load pressure increases.

For example, the media file may be played across devices in a streaming transmission manner.

In the streaming transmission manner, a third party, for example, a streaming media server, is usually needed to implement cross-device play of the media file. This is not applicable to a scenario in which only a terminal device exists in a local area network.

Therefore, this application provides a media file transmission method. According to the method, a first electronic device determines a pre-read data amount of the media file at each moment based on a bit rate of the media file at each moment, so that the first electronic device sends the media file to a second electronic device based on the pre-read data amount of the media file at each moment, and the media file is played across electronic devices. Therefore, the first electronic device may transmit different media files by using a data amount suitable for transmission of the media file, so that network bandwidth utilization is optimized, occurrence of a frame freezing phenomenon during play of the media file is reduced, a packet loss rate of playing the media file across electronic devices is reduced, and user experience is improved.

For example, the first electronic device may be the mobile phone 201, the large screen 202, the tablet computer 203, or the PC 204 shown in FIG. 2.

For example, the second electronic device may be the mobile phone 201, the large screen 202, the tablet computer 203, or the PC 204 shown in FIG. 2.

For example, the first electronic device may be the mobile phone 201, and the second electronic device may be the large screen 202, the tablet computer 203, or the PC 204.

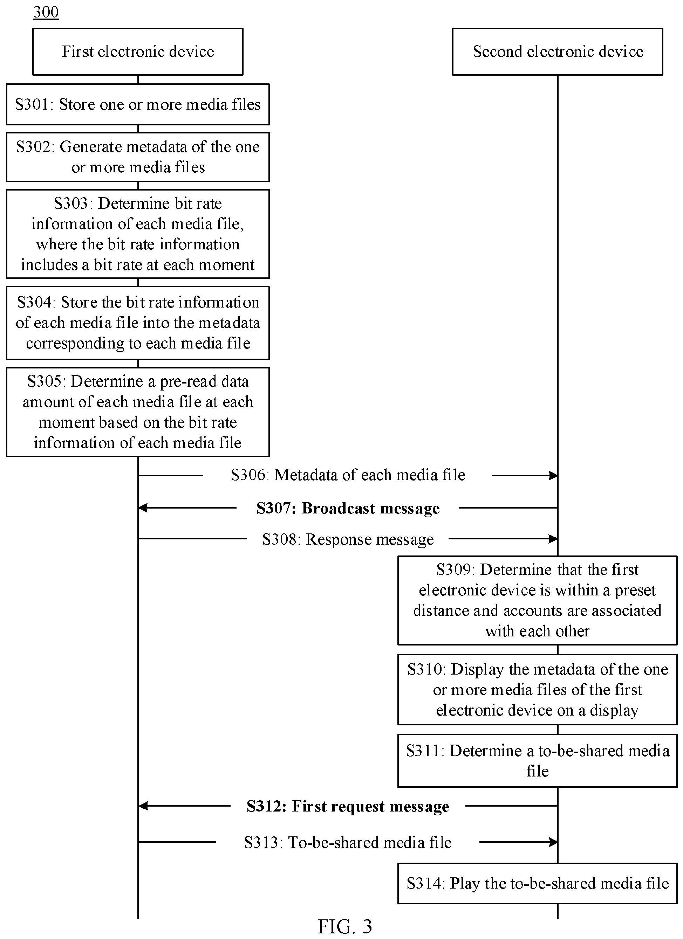

FIG. 3 is a schematic flowchart of a media file transmission method 300 according to an embodiment of this application. The method 300 includes the following steps.

S301: A first electronic device stores one or more media files.

For example, the media file may include a video file and/or an audio file.

S302: The first electronic device generates metadata for each of the one or more media files.

The metadata is a basic attribute of the media file.

For example, the metadata of each media file may include information such as a name of the media file and a size of the media file.

For example, if there are 10 videos in the first electronic device, 10 pieces of metadata are generated for the 10 videos. Each piece of metadata may include a video name, a video size, and the like of the video.

S303: The first electronic device determines bit rate information of each media file based on each media file. The bit rate information of the media file includes bit rates at n moments, n is greater than or equal to 1, n is a positive integer, the n moments are respectively Tj, and j=1, 2, 3, ..., and n.

A specific form of the moment is not limited in this application.

For example, the moment may be a millisecond, a second, a half second, or the like.

For ease of description, in this embodiment of this application, a second is used as an example for description.

For example, the first electronic device may obtain the bit rate information of each media file by parsing video software.

Specifically, the media file is imported into the video parsing software, and the video parsing software analyzes the media file to obtain the bit rate information corresponding to the media file.

For example, the foregoing video parsing software may be ffprobe software.

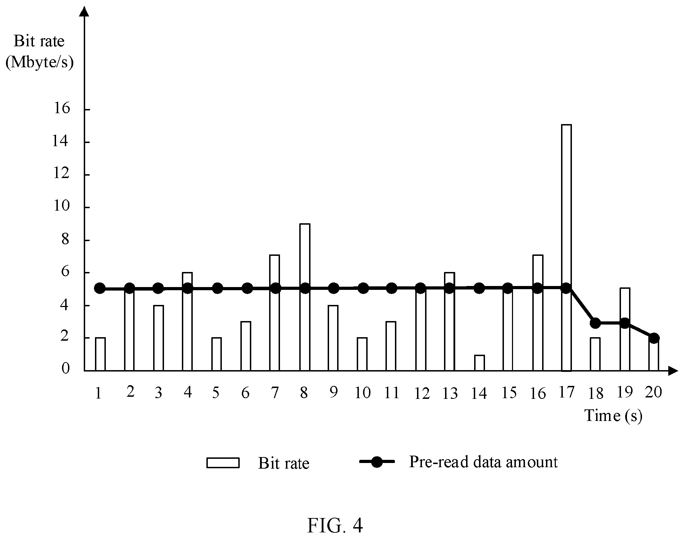

For example, FIG. 4 is a schematic diagram of an example of a bit rate corresponding to a media file at each moment.

The media file includes bit rates within 20 seconds. A bar chart shows the bit rate corresponding to the media file at each moment.

S304: The first electronic device stores bit rate information corresponding to each media file into metadata corresponding to each media file.

In this case, the metadata corresponding to each media file further includes the bit rate information corresponding to each media file.

S305: The first electronic device determines a pre-read data amount of each media file at each moment based on the bit rate information of each media file.

Manner 1 as below describes how the first electronic device determines the pre-read data amount of each media file at each moment based on the bit rate information of each media file. Moreover, the following also uses Manner 2 and Manner 3 as examples to describe how the first electronic device determines the pre-read data amount of each media file at each moment based on the bit rate information of each media file.

Manner 1

Initially, an average bit rate at each moment Tj within a time period between a moment ti-1 and a moment tm is calculated based on the bit rate information of the media file, where i=1, 2, 3, ..., and m, a moment t0 is a moment T1, the moment tm is a moment Tn, the moment ti-1 is a moment Tb, 1≤m≤n, and 1≤b≤n.

The first electronic device calculates the average bit rate that is at each moment Tj within the time period between the moment ti-1 and the moment tm and that corresponds to each media file as follows.

When i is equal to 1, average bit rates at Tj moments within the time period between the moment ti-1 and the moment tm are calculated for example according to Formula (1):

$$P_j = \frac{\sum_1^j b_j}{j} \quad (1)$$

When i is greater than 1, average bit rates at $T_j$ moments within the time period between the moment $t_{i-1}$ and the moment $t_m$ are calculated for example according to Formula (2):

$$P_j = \frac{\sum_{b+1}^j b_j}{j-b} \quad (2),$$

where

$P_j$ is an average bit rate at a $j^{th}$ moment, and $b_j$ is a bit rate at a $j^{th}$ moment.

In another implementable manner, the first electronic device may calculate, according to the foregoing Formula (1), the average bit rate that is at each moment Tj within the time period between the moment ti-1 and the moment tm and that corresponds to each media file as follows.

For example, as shown in Table 1, when i=0, an average bit rate at the 3rd second is a sum of bit rates at previous 3 seconds divided by 3.

For another example, as shown in Table 1, when i=0, an average bit rate at the 4th second is a sum of bit rates at previous 4 seconds divided by 4.

Then, the moment ti is determined within the time period between the moment ti-1 and the moment tm, where an average bit rate at the moment ti is a largest average bit rate in average bit rates within the time period between the moment ti-1 and the moment tm, the moment ti is the moment Ta, and 1≤a≤n. When i is equal to 1, the average bit rate at the moment ti is used as a pre-read data amount from the moment Tb to the moment Ta; or when i is greater than 1, the average bit rate at the moment ti is used as a pre-read data amount from the moment Tb+1 to the moment Ta, where the moment Tb+1 is a next moment of the moment Tb.

For example, Table 1 shows an example of a bit rate and a pre-read data amount of a media file per second.

**Table 1**

| Moment $T_j$ (second) | Bit rate (Mbyte/s) | Average bit rate (Mbyte/s) | | | Moment $t_i$ | Pre-read data amount (Mbyte/s) |
|---|---|---|---|---|---|---|
| | | First time | Second time | Third time | | |
| 1 | 2 | 2 | | | $t_0$ | 86/17 |
| 2 | 5 | 3.5 | | | | 86/17 |
| 3 | 4 | 11/3 | | | | 86/17 |
| 4 | 6 | 4.25 | | | | 86/17 |
| 5 | 2 | 3.8 | | | | 86/17 |
| 6 | 3 | 11/3 | | | | 86/17 |
| 7 | 7 | 29/7 | | | | 86/17 |
| 8 | 9 | 4.75 | | | | 86/17 |
| 9 | 4 | 42/9 | | | | 86/17 |
| 10 | 2 | 4.4 | | | | 86/17 |
| 11 | 3 | 47/11 | | | | 86/17 |
| 12 | 5 | 13/3 | | | | 86/17 |
| 13 | 6 | 58/13 | | | | 86/17 |
| 14 | 1 | 59/14 | | | | 86/17 |
| 15 | 5 | 64/15 | | | | 86/17 |
| 16 | 7 | 71/16 | | | | 86/17 |
| **17** | **15** | **86/17** | | | $t_1$ | 86/17 |
| 18 | 2 | 44/9 | 2 | | | 3.5 |
| **19** | **5** | 93/19 | **3.5** | | $t_2$ | 3.5 |
| 20 | 2 | 4.75 | 3 | 2 | $t_3$ | 2 |

The following is an example of a process in which the first electronic device determines the pre-read data amount of the media file per second based on the bit rate of the media file per second described in Table 1.

For the first time, when i=1, within duration (20 seconds) of the entire media file, the average bit rate at each moment Tj within a time period between the moment t0 (the moment T1) and the moment tm (the moment T20) is calculated according to the foregoing Formula (1). In other words, the average bit rate per second within a time period between the 1st second and the 20th second is calculated according to the foregoing Formula (1).

Within the time period between the 1st second and the 20th second, the average bit rate at the moment T17 is a largest average bit rate. Therefore, the moment t1 is the moment T17. To be specific, the average bit rate corresponding to the 17th second is used as the pre-read data amount corresponding to the 1st second to the 17th second.

For the second time, when i=2, the average bit rate at each moment Tj within a time period from the moment t1 (the moment T17) to the moment tm (the moment T20) is calculated according to the foregoing Formula (2). In other words, the average bit rate per second within a time period between the 17th second and the 20th second is calculated according to the foregoing Formula (2).

In this case, in Formula (2), b=17.

Within the time period between the 17th second and the 20th second, the average bit rate at the moment T19 is a largest average bit rate, the moment t2 is the moment T19. To be specific, the average bit rate corresponding to the 19th second is used as the pre-read data amount corresponding to the 18th second to the 19th second.

In the third time, when i=3, the average bit rate at each moment Tj within a time period between the moment t2 (the moment T19) and the moment tm (the moment T20) is calculated according to the foregoing Formula (2). In other words, the average bit rate per second within a time period between the 19th second and the 20th second is calculated according to the foregoing Formula (2).

In this case, in Formula (2), b=19.

Within the time period between the 19th second and the 20th second, the average bit rate at the moment T20 is a largest average bit rate. Therefore, the moment t3 is the moment T20. To be specific, the average bit rate corresponding to the 20th second is used as the pre-read data amount corresponding to the 20th second.

In this case, as shown in FIG. 4, the pre-read data amount of the entire media file per second is shown in a fold line chart in 5.

In the foregoing manner 1, a packet loss rate is reduced, and occurrence of a video frame freezing phenomenon is effectively reduced.

Manner 2

After the first electronic device calculates, according to the foregoing Formula (1), the average bit rate corresponding to each media file at each moment, the first electronic device uses the average bit rate at a first moment as the pre-read data amount corresponding to the entire media file at each moment.

Manner 3

The first electronic device uses a bit rate that is at each moment and that corresponds to the media file as a pre-read data amount at each moment.

S306: The first electronic device sends the metadata of each media file of the first electronic device to a second electronic device.

For example, the second electronic device may store, in a data storage area of the second electronic device, the metadata that is of each media file and that is sent by the first electronic device.

Optionally, S306 may be performed after S304, or S306 may be performed after S305.

S307: The second electronic device sends a broadcast message, where the broadcast message is used to search for an electronic device within a preset distance, and the broadcast message may include an identifier and address information of the second electronic device.

For example, the broadcast message is a Bluetooth low energy BLE broadcast message.

For example, the identifier of the second electronic device may be a device name of the second electronic device or a device number of the second electronic device.

The device number of the second electronic device uniquely identifies the second electronic device.

For example, the device number of the second electronic device may be an identification (identification, ID) of the second electronic device.

S308: The first electronic device sends a response message to the second electronic device based on the address information in the broadcast message, where the response message includes an identifier of the first electronic device.

For example, the identifier of the first electronic device may be a device name of the first electronic device or a device number of the first electronic device.

The device number of the first electronic device uniquely identifies the first electronic device.

For example, the device number of the first electronic device may be an ID of the first electronic device.

S309: The second electronic device determines, based on the response message, that the first electronic device is an electronic device within the preset distance, and a logged-in account on the first electronic device is associated with a logged-in account on the second electronic device.

In an implementable manner, the second electronic device may determine, based on signal strength or signal quality of the response message sent by the first electronic device, whether a distance between the first electronic device and the second electronic device is within the preset distance.

Signal strength and signal quality (the following uses a long term evolution (long term evolution, LTE) system as an example for description) in this embodiment of this application may include one or more of the following parameters:

(1) Reference signal received power (reference signal received power, RSRP);
(2) Received signal strength indicator (received signal strength indicator, RSSI);
(3) Reference signal received quality (reference signal received quality, RSRQ); and
(4) Signal to interference plus noise ratio (signal to interference plus noise ratio, SINR).

It should be understood that the foregoing uses only an example in which the distance between the second electronic device and the first electronic device is determined by the second electronic device based on the signal strength or the signal quality. The distance between the second electronic device and the first electronic device may be alternatively determined in another manner. This is not limited in this embodiment of this application.

Optionally, that a logged-in account on the first electronic device is associated with a logged-in account on the second electronic device includes: the logged-in account on the first electronic device is the same as the logged-in account on the second electronic device; the logged-in account on the first electronic device and the logged-in account on the second electronic device are located in a same family group; or the logged-in account on the first electronic device is an account authorized by the logged-in account on the second electronic device.

For example, the second electronic device may store information that is about an identifier of another electronic device and that is under the logged-in account on the second electronic device. In this case, the second electronic device may determine, based on the device identifier in the response message, that the first electronic device is a device under a same account.

For example, the second electronic device may further store a device identifier of a device under another account that is in a same family group as the logged-in account on the second electronic device. In this case, the second electronic device may determine, based on the device identifier in the response message, that the first electronic device is a device under the same account, or is a device under another account in the family group.

In this embodiment of this application, when the first electronic device and the second electronic device are devices under the same account, or are devices under different accounts in the family group, the first electronic device and the second electronic device may directly trust each other by using a trust ring.

S310: The second electronic device displays the metadata of one or more media files of the first electronic device on a display.

In an implementable manner, the second electronic device may further display the device name of the second electronic device, a quantity of media files, and/or the like on the display.

S311: The second electronic device determines a to-be-shared media file.

In an implementable manner, after detecting that the user taps the metadata of the media file on the display of the second electronic device, the second electronic device determines the metadata of the media file tapped by the user as the to-be-shared media file.

In another implementable manner, the user may input the metadata of the to-be-shared media file through voice, and the second electronic device may obtain the to-be-shared media file after analyzing voice information input by the user.

S312: The second electronic device sends a first request message to the first electronic device, where the first request message is used to request the to-be-shared media file.

The first request message may carry the metadata of the to-be-shared media file.

S313: The first electronic device determines the to-be-shared media file based on the first request message, and sends the to-be-shared media file to the second electronic device based on the pre-read data amount that corresponds to the to-be-shared media file at each moment and that is determined in S305.

The second electronic device may cache the to-be-shared media file.

S314: The second electronic device plays the to-be-shared media file.

Specifically, when media file software on the second electronic device plays the to-be-shared media file, the media file software may read the media file from a unit in which the to-be-shared media file is stored, and play the media file.

In an implementable manner, when the second electronic device just starts to play the media file, the second electronic device may play the media file after reading the media file for a preset time period.

For example, the preset time period may be set to 2 seconds.

In this way, a play start delay requirement can be met. Further, occurrence of a play start delay can be effectively reduced, and memory is not excessively occupied.

In this embodiment of this application, the first electronic device determines bit rates of the media file at the n moments, and determines a pre-read data amount of the media file at each moment based on the bit rates of the media file at the n moments, so that the first electronic device sends the media file to the second electronic device based on the pre-read data amounts of the media file at the n moments, and the media file is played across electronic devices. Therefore, the first electronic device may transmit different media files by using a data amount suitable for transmission of the media file, so that network bandwidth utilization is optimized, and a packet loss rate of playing the media file across electronic devices is reduced. The second electronic device pre-stores a data block based on the pre-read data amount, and plays the media file based on the pre-read data amount, so that an opening speed of play start of a video is effectively improved, occurrence of a frame freezing phenomenon during play of the media file is reduced, memory space is used as required, and user experience is improved.

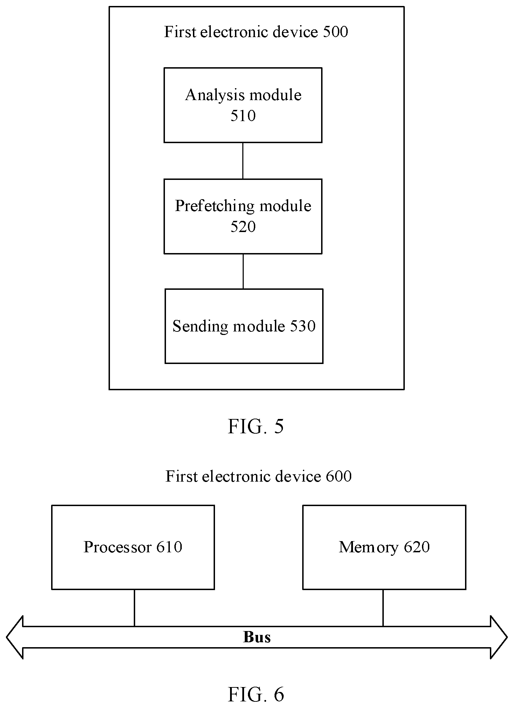

The foregoing describes in detail the media file transmission method in embodiments of this application with reference to FIG. 1 to FIG. 4. The following describes in detail an electronic device in embodiments of this application with reference to FIG. 5 to FIG. 8.

FIG. 5 is a schematic diagram of a structure of a first electronic device according to an embodiment of this application. A first electronic device 500 in FIG. 5 may be the first terminal device mentioned above. The first electronic device 500 shown in FIG. 5 includes an analysis module 510, a prefetching module 520, and a sending module 530.

The analysis module 510 is configured to determine bit rate information of a media file, where the bit rate information includes bit rates at n moments, n is greater than or equal to 1, n is a positive integer, the n moments are respectively Tj, and j=1, 2, 3, ..., and n.

The prefetching module 520 is configured to determine pre-read data amounts of the media file at the n moments based on the bit rate information.

The sending module 530 is configured to send the media file based on the pre-read data amounts at the n moments.

Optionally, the prefetching module 520 is further specifically configured to: calculate an average bit rate at each moment Tj within a time period between a moment ti-1 and a moment tm based on the bit rate information, where i=1, 2, 3, ..., and m, a moment t0 is a moment T1, the moment tm is a moment Tn, the moment ti-1 is a moment Tb, $1 \leq m \leq n$, and $1 \leq b \leq n$; determine a moment ti within the time period between the moment ti-1 and the moment tm, where an average bit rate at the moment ti is a largest average bit rate in average bit rates within the time period between the moment ti-1 and the moment tm, the moment ti is a moment Ta, and $1 \leq a \leq n$; and when i is equal to 1, use the average bit rate at the moment ti as a pre-read data amount from the moment Tb to the moment Ta; or when i is greater than 1, use the average bit rate at the moment ti as a pre-read data amount from a moment Tb+1 to the moment Ta, where the moment Tb+1 is a next moment of the moment Tb.

Optionally, the prefetching module 520 is further specifically configured to: when i is equal to 1, calculate average bit rates at Tj moments within the time period between the moment ti-1 and the moment tm according to Formula (1):

$$P_j = \frac{\sum_{b+1}^{j} b_j}{j-b} \quad (1),$$

where

$P_j$ is an average bit rate at a $j^{th}$ moment, and $b_j$ is a bit rate at a $j^{th}$ moment; or
when i is greater than 1, calculate average bit rates at $T_j$ moments within the time period between the moment $t_{i-1}$ and the moment $t_m$ according to Formula (2):

$$P_j = \frac{\sum_{b+1}^{j} b_j}{j-b} \quad (2),$$

where
$P_j$ is an average bit rate at a $j^{th}$ moment, and $b_j$ is a bit rate at a $j^{th}$ moment.

Optionally, the prefetching module 520 is further specifically configured to: respectively use the bit rates at the n moments as the pre-read data amounts at the n moments.

Optionally, the media file includes a video file and/or an audio file.

FIG. 6 is a schematic diagram of a structure of a first electronic device 600 according to an embodiment of this application. As shown in FIG. 6, the first electronic device includes one or more processors 610 and one or more memories 620. The one or more memories 620 store one or more computer programs and the one or more computer programs include instructions. When the instructions are run by the one or more processors 610, the first electronic device is enabled to perform the technical solutions in the foregoing embodiments; or when the instructions are run by the one or more processors 610, the first electronic device is enabled to perform the technical solutions in the foregoing embodiments.

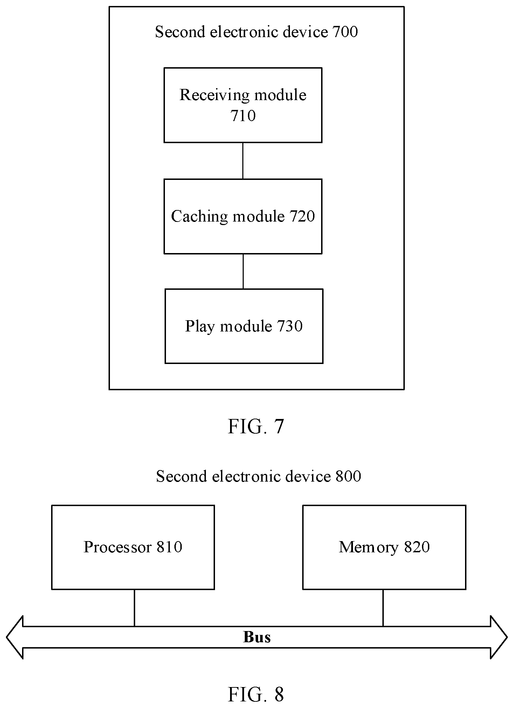

FIG. 7 is a schematic diagram of a structure of a second electronic device according to an embodiment of this application. A second electronic device 700 in FIG. 7 may be the second electronic device mentioned above. The second electronic device 700 shown in FIG. 7 includes a receiving module 710.

The receiving module 710 is configured to receive a media file that is sent by a first electronic device based on pre-read data amounts at n moments, where the pre-read data amounts at the n moments are determined based on bit rate information of the media file, the bit rate information includes bit rates at the n moments, n is greater than or equal to 1, n is a positive integer, the n moments are respectively Tj, and j=1, 2, 3, ..., and n.

Optionally, the second electronic device 700 further includes a caching module 720, configured to cache the media file.

Optionally, the second electronic device 700 further includes a play module 730, configured to: read the media file from the caching module 720, and play the media file.

Optionally, the play module 730 is further configured to play the media file after reading the media file from the caching module 720 for a preset time period, where the preset time period is less than total duration of the media file.

FIG. 8 is a schematic diagram of a structure of a first electronic device 800 according to an embodiment of this application. As shown in FIG. 8, the first electronic device includes one or more processors 810 and one or more memories 820. The one or more memories 820 store one or more computer programs and the one or more computer programs include instructions. When the instructions are run by the one or more processors 810, the first electronic device is enabled to perform the technical solutions in the foregoing embodiments; or when the instructions are run by the one or more processors 810, the first electronic device is enabled to perform the technical solutions in the foregoing embodiments.

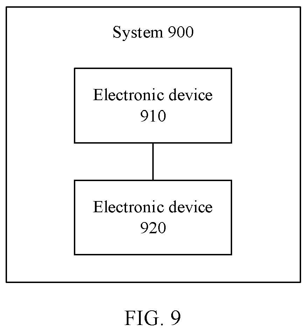

An embodiment of this application further provides a system. FIG. 9 is a schematic block diagram of a system 900 according to an embodiment of this application. As shown in FIG. 9, the system 900 includes an electronic device 910 and an electronic device 920. The electronic device 910 may be the first electronic device 500 shown in FIG. 5, or the electronic device 910 may be the first electronic device 600 shown in FIG. 6. The electronic device 920 may be the second electronic device 700 shown in FIG. 7, or the electronic device 920 may be the second electronic device 800 shown in FIG. 8.

An embodiment of this application further provides a chip. The chip includes a transceiver unit and a processing unit. The transceiver unit may be an input/output circuit or a communication interface. The processing unit is a processor, a microprocessor, or an integrated circuit integrated on the chip. The chip may perform the methods in the foregoing method embodiments.

An embodiment of this application further provides a computer-readable storage medium. The computer-readable storage medium stores instructions. When the instructions are executed, the methods in the foregoing method embodiments are performed.

An embodiment of this application further provides a computer program product including instructions. When the instructions are executed, the methods in the foregoing method embodiments are performed.

It should be further understood that, in this embodiment of this application, the memory may include a read-only memory and a random access memory, and provide instructions and data to the processor. A part of the processor may further include a non-volatile random access memory. For example, the processor may further store information about a device type.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

It should be understood that the term "and/or" in this specification merely describes an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that, in various embodiments of this application, sequence numbers of the foregoing processes do not mean an execution sequence. The execution sequence of the processes should be determined based on functions and internal logic of the processes, and should not constitute any limitation on the implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are executed by hardware or software depends on a particular application and a design constraint condition that are of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. The described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one location, or may be distributed on a plurality of network units. Some or all of the units may be selected based on an actual requirement to achieve the objectives of the solutions of the embodiments.

In addition, functional modules in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part that contributes to a current technology, or the part of the technical solutions may be embodied in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A media file transmission method, wherein the method is applied to an electronic device (500, 600), and the method comprises:

   determining bit rate information of a media file, wherein the bit rate information comprises bit rates at n moments, n is greater than or equal to 1, n is a positive integer, the n moments are respectively $T_j$, and j=1, 2, 3, ..., and n;
   determining pre-read data amounts of the media file at the n moments based on the bit rate information; and
   sending the media file based on the pre-read data amounts at the n moments;
   wherein the determining pre-read data amounts of the media file at the n moments based on the bit rate information comprises:

   calculating an average bit rate at each moment $T_j$ within a time period between a moment $t_{i-1}$ and a moment $t_m$ based on the bit rate information, wherein i=1, 2, 3, ..., and m, a moment $t_0$ is a moment $T_1$, the moment $t_m$ is a moment $T_n$, the moment $t_{i-1}$ is a moment $T_b$, $1 \leq m \leq n$, and $1 \leq b \leq n$;
   determining a moment $t_i$ within the time period between the moment $t_{i-1}$ and the moment $t_m$, wherein an average bit rate at the moment $t_i$ is a largest average bit rate in average bit rates within the time period between the moment $t_{i-1}$ and the moment $t_m$, the moment $t_i$ is a moment $T_a$, and $1 \leq a \leq n$; and
   when i is equal to 1, using the average bit rate at the moment $t_i$ as a pre-read data amount from the moment $T_b$ to the moment $T_a$; or

when i is greater than 1, using the average bit rate at the moment $t_i$ as a pre-read data amount from a moment $T_{b+1}$ to the moment $T_a$, wherein the moment $T_{b+1}$ is a next moment of the moment $T_b$.

2. The method according to claim 1, wherein the calculating an average bit rate at each moment $T_j$ within a time period between a moment $t_{i-1}$ and a moment $t_m$ based on the bit rate information comprises:

when i is equal to 1, calculating average bit rates at $T_j$ moments within the time period between the moment $t_{i-1}$ and the moment $t_m$ according to Formula (1):

$$P_j = \frac{\sum_1^j b_j}{j} \quad (1),$$

wherein
$P_j$ is an average bit rate at a $j^{th}$ moment, and $b_j$ is a bit rate at a $j^{th}$ moment; or
when i is greater than 1, calculating average bit rates at $T_j$ moments within the time period between the moment $t_{i-1}$ and the moment $t_m$ according to Formula (2):

$$P_j = \frac{\sum_{b+1}^j b_j}{j-b} \quad (2),$$

wherein
$P_j$ is an average bit rate at a $j^{th}$ moment, and $b_j$ is a bit rate at a $j^{th}$ moment.

3. The method according to claim 1, wherein the determining pre-read data amounts of the media file at the n moments based on the bit rate information comprises:
respectively using the bit rates at the n moments as the pre-read data amounts at the n moments.

4. The method according to any one of claims 1 to 3, wherein the media file comprises a video file and/or an audio file.

5. An electronic device (600), comprising one or more processors (610) and one or more memories (620), wherein the one or more memories (620) store one or more computer programs, the one or more computer programs comprise instructions, and when the instructions are executed by the one or more processors (610), the electronic device (600) is enabled to perform the method according to any one of claims 1 to 4.

6. A computer-readable storage medium, wherein the computer-readable storage medium stores a computer program, and when the computer program is run on a computer, the computer is enabled to perform the method according to any one of claims 1 to 4.

7. A system (900), wherein the system (900) comprises the electronic device according to claim 5 (910).

**Patentansprüche**

1. Verfahren zur Übertragung von Mediendateien, wobei das Verfahren auf eine elektronische Einrichtung (500, 600) angewandt wird und das Verfahren Folgendes umfasst:

Bestimmen von Bitrateninformationen einer Mediendatei, wobei die Bitrateninformationen Bitraten zu n Zeitpunkten umfassen, n größer als oder gleich 1 ist, n eine positive Ganzzahl ist, die n Zeitpunkte jeweils $T_j$ sind und j=1, 2, 3, ... und n ist;
Bestimmen vorab gelesener Datenmengen der Mediendatei zu den n Zeitpunkten basierend auf den Bitrateninformationen; und
Senden der Mediendatei basierend auf den vorab gelesenen Datenmengen zu den n Zeitpunkten;
wobei das Bestimmen der vorab gelesenen Datenmengen der Mediendatei zu den n Zeitpunkten basierend auf den Bitrateninformationen Folgendes umfasst:

Berechnen einer durchschnittlichen Bitrate zu jedem Zeitpunkt $T_j$ innerhalb einer Zeitspanne zwischen einem Zeitpunkt $t_{i-1}$ und einem Zeitpunkt $t_m$ basierend auf den Bitrateninformationen, wobei i=1, 2, 3, ... und m ist, ein Zeitpunkt $t_0$ ein Zeitpunkt $T_1$ ist, der Zeitpunkt $t_m$ ein Zeitpunkt $T_n$ ist, der Zeitpunkt $t_{i-1}$ ein Zeitpunkt $T_b$ ist, 1≤m≤n und 1≤b≤n;

Bestimmen eines Zeitpunkts $t_i$ innerhalb der Zeitspanne zwischen dem Zeitpunkt $t_{i-1}$ und dem Zeitpunkt $t_m$, wobei eine durchschnittliche Bitrate zu dem Zeitpunkt $t_i$ eine größte durchschnittliche Bitrate in durchschnittlichen Bitraten innerhalb der Zeitspanne zwischen dem Zeitpunkt $t_{i-1}$ und dem Zeitpunkt $t_m$ ist, der Zeitpunkt $t_i$ ein Zeitpunkt $T_a$ ist und 1≤ a≤n; und

wenn i gleich 1 ist, Verwenden der durchschnittlichen Bitrate zu dem Zeitpunkt $t_i$ als eine vorab gelesene Datenmenge von dem Zeitpunkt $T_b$ bis zu dem Zeitpunkt $T_a$; oder

wenn i größer als 1 ist, Verwenden der durchschnittlichen Bitrate zu dem Zeitpunkt $t_i$ als eine vorab gelesene Datenmenge von einem Zeitpunkt $T_{b+1}$ bis zu dem Zeitpunkt $T_a$, wobei der Zeitpunkt $T_{b+1}$ ein nächster Zeitpunkt des Zeitpunkts $T_b$ ist.

2. Verfahren nach Anspruch 1, wobei das Berechnen einer durchschnittlichen Bitrate zu jedem Zeitpunkt $T_j$ innerhalb einer Zeitspanne zwischen einem Zeitpunkt $t_{i-1}$ und einem Zeitpunkt $t_m$ basierend auf den Bitrateninformationen Folgendes umfasst:

wenn i gleich 1 ist, Berechnen durchschnittlicher Bitraten zu $T_j$ Zeitpunkten innerhalb der Zeitspanne zwischen dem Zeitpunkt $t_{i-1}$ und dem Zeitpunkt $t_m$ gemäß Formel (1):

$$P_j = \frac{\sum_1^j b_j}{j} \quad (1),$$

wobei
$P_j$ eine durchschnittliche Bitrate zu einem j-ten Zeitpunkt ist und $b_j$ eine Bitrate zu einem j-ten Zeitpunkt ist; oder
wenn i größer als 1 ist, Berechnen durchschnittlicher Bitraten zu $T_j$ Zeitpunkten innerhalb der Zeitspanne zwischen dem Zeitpunkt $t_{i-1}$ und dem Zeitpunkt $t_m$ gemäß Formel (2):

$$P_j = \frac{\sum_{b+1}^j b_j}{j-b} \quad (2),$$

wobei
$P_j$ eine durchschnittliche Bitrate zu einem j-ten Zeitpunkt ist und $b_j$ eine Bitrate zu einem j-ten Zeitpunkt ist.

3. Verfahren nach Anspruch 1, wobei das Bestimmen vorab gelesener Datenmengen der Mediendatei zu den n Zeitpunkten basierend auf den Bitrateninformationen Folgendes umfasst:
jeweiliges Verwenden der Bitraten zu den n Zeitpunkten als die vorab gelesenen Datenmengen zu den n Zeitpunkten.

4. Verfahren nach einem der Ansprüche 1 bis 3, wobei die Mediendatei eine Videodatei und/oder eine Audiodatei umfasst.

5. Elektronische Einrichtung (600), umfassend einen oder mehrere Prozessoren (610) und einen oder mehrere Speicher (620), wobei der eine oder die mehreren Speicher (620) ein oder mehrere Computerprogramme speichern, das eine oder die mehreren Computerprogramme Anweisungen umfassen und, wenn die Anweisungen durch den einen oder die mehreren Prozessoren (610) ausgeführt werden, es der elektronischen Einrichtung (600) ermöglicht wird, das Verfahren nach einem der Ansprüche 1 bis 4 durchzuführen.

6. Computerlesbares Speichermedium, wobei das computerlesbare Speichermedium ein Computerprogramm speichert und, wenn das Computerprogramm auf einem Computer läuft, es dem Computer ermöglicht wird, das Verfahren nach einem der Ansprüche 1 bis 4 durchzuführen.

7. System (900), wobei das System (900) die elektronische Einrichtung nach Anspruch 5 (910) umfasst.

**Revendications**

1. Procédé de transmission de fichier multimédia, dans lequel le procédé est appliqué à un dispositif électronique (500, 600), et le procédé comprend :

   la détermination d'informations de débit binaire d'un fichier multimédia, dans lequel les informations de débit binaire comprennent des débits binaires à n moments, n est supérieur ou égal à 1, n est un entier positif, les n moments sont respectivement $T_j$, et j = 1, 2, 3, ..., et n ;
   la détermination de quantités de données prélues du fichier multimédia aux n moments sur la base des informations de débit binaire ; et
   l'envoi du fichier multimédia sur la base des quantités de données prélues aux n moments ;
   dans lequel la détermination des quantités de données prélues du fichier multimédia aux n moments sur la base des informations de débit binaire comprend :

   le calcul d'un débit binaire moyen à chaque moment $T_j$ dans une période de temps entre un moment $t_{i-1}$ et un moment $t_m$ sur la base des informations de débit binaire, dans lequel i = 1, 2, 3, ..., et m, un moment $t_0$ est un moment $T_1$, le moment $t_m$ est un moment $T_n$, le moment $t_{i-1}$ est un moment $T_b$, $1 \leq m \leq n$, et $1 \leq b \leq n$ ;
   la détermination d'un moment $t_i$ dans la période de temps entre le moment $t_{i-1}$ et le moment $t_m$, dans lequel un débit binaire moyen au moment $t_i$ est un débit binaire moyen le plus élevé parmi les débits binaires moyens dans la période de temps entre le moment $t_{i-1}$ et le moment $t_m$, le moment $t_i$ est un moment $T_a$, et $1 \leq a \leq n$ ; et
   lorsque i est égal à 1, l'utilisation du débit binaire moyen au moment $t_i$ comme une quantité de données prélues du moment $T_b$ au moment $T_a$ ; ou
   lorsque i est supérieur à 1, l'utilisation du débit binaire moyen au moment $t_i$ comme une quantité de données prélues d'un moment $T_{b+1}$ au moment $T_a$, dans lequel le moment $T_{b+1}$ est un moment suivant du moment $T_b$.

2. Procédé selon la revendication 1, dans lequel le calcul d'un débit binaire moyen à chaque moment $T_j$ dans une période de temps comprise entre un moment $t_{i-1}$ et un moment $t_m$, sur la base des informations de débit binaire, comprend :

   lorsque i est égal à 1, le calcul de débits binaires moyens aux moments $T_j$ dans la période de temps entre le moment $t_{i-1}$ et le moment $t_m$ selon la formule (1) :

$$P_j = \frac{\sum_1^j b_j}{j} \quad (1),$$

   wherein
   $P_j$ est un débit binaire moyen à un jème moment, et $b_j$ est un débit binaire à un jème moment ; ou
   lorsque i est supérieur à 1, le calcul de débits binaires moyens aux moments $T_j$ dans la période de temps entre le moment $t_{i-1}$ et le moment $t_m$ selon la formule (2) :

$$P_j = \frac{\sum_{b+1}^j b_j}{j - b} \quad (2),$$

   wherein
   $P_j$ est un débit binaire moyen à un jème moment, et $b_j$ est un débit binaire à un jème moment.

3. Procédé selon la revendication 1, dans lequel la détermination de quantités de données prélues du fichier multimédia aux n moments sur la base des informations de débit binaire comprend :
   l'utilisation respective des débits binaires aux n moments comme les quantités de données prélues aux n moments.

4. Procédé selon l'une quelconque des revendications 1 à 3, dans lequel le fichier multimédia comprend un fichier vidéo et/ou un fichier audio.

5. Dispositif électronique (600), comprenant un ou plusieurs processeurs (610) et une ou plusieurs mémoires (620), dans lequel les une ou plusieurs mémoires (620) stockent un ou plusieurs programmes informatiques, les un ou plusieurs programmes informatiques comprennent des instructions, et lorsque les instructions sont exécutées par les un ou plusieurs processeurs (610), le dispositif électronique (600) est activé pour réaliser le procédé selon l'une quelconque des revendications 1 à 4.

6. Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé selon l'une quelconque des revendications 1 à 4.

7. Système (900), dans lequel le système (900) comprend le dispositif électronique selon la revendication 5 (910).

Electronic device 100

FIG. 1

202

Network

201

203

204

FIG. 2

<u>300</u>

| First electronic device | Second electronic device |
|---|---|

S301: Store one or more media files

S302: Generate metadata of the one or more media files

S303: Determine bit rate information of each media file, where the bit rate information includes a bit rate at each moment

S304: Store the bit rate information of each media file into the metadata corresponding to each media file

S305: Determine a pre-read data amount of each media file at each moment based on the bit rate information of each media file

S306: Metadata of each media file ⟶

⟵ **S307: Broadcast message**

S308: Response message ⟶

S309: Determine that the first electronic device is within a preset distance and accounts are associated with each other

S310: Display the metadata of the one or more media files of the first electronic device on a display

S311: Determine a to-be-shared media file

⟵ **S312: First request message**

S313: To-be-shared media file ⟶

S314: Play the to-be-shared media file

FIG. 3

FIG. 4

First electronic device 500

Analysis module
510

Prefetching module
520

Sending module 530

FIG. 5

First electronic device 600

Processor 610

Memory 620

Bus

FIG. 6

Second electronic device 700

Receiving module
710

Caching module 720

Play module 730

FIG. 7

Second electronic device 800

Processor 810

Memory 820

**Bus**

FIG. 8

FIG. 9

**EP 4 191 974 B1**

**Patent documents cited in the description**

- CN 202010897642
- US 2016105478 A1
- CN 107819551 A